# EUROPÄISCHE PATENTANMELDUNG

(11) **EP 4 142 043 A1**
(43) Veröffentlichungstag der Anmeldung: **01.03.2023**
(21) Anmeldenummer: 22188196.4
(22) Anmeldetag: 02.08.2022
(51) Int. Cl.: H01M 50/636, H01M 50/103, H01M 50/184, H01M 50/645

(54) **VERFAHREN ZUR HERSTELLUNG EINER BATTERIEZELLE**

(30) Priorität: 26.08.2021 DE 102021209413
(71) Anmelder: VOLKSWAGEN AG, 38440 Wolfsburg (DE)
(72) Erfinder: MARSCHALL, Maximilian, 37115 Duderstadt (DE); PRZYKLENK, Thomas, 38102 Braunschweig (DE); BREUER, Alexander, 29227 Celle (DE)
(74) Vertreter: FDST Patentanwälte

(57) **Zusammenfassung**

Die Erfindung betrifft ein Verfahren zur Herstellung einer Batteriezelle (6), wobei die Batteriezelle (6) ein prismatisches Zellgehäuse (8) mit einer stirnseitigen Deckelplatte (10) mit einer Einfüllöffnung (14) aufweist, bei welchem in die Einfüllöffnung (14) ein Setzbolzen (18) durch ein Bolzensetzprozess derart eingepresst wird, dass der Setzbolzen (18) die Einfüllöffnung (14) fluiddicht verschließt.

## Beschreibung

Die Erfindung betrifft ein Verfahren zur Herstellung einer Batteriezelle, wobei die Batteriezelle ein prismatisches Zellgehäuse mit einer stirnseitigen Deckelplatte mit einer Einfüllöffnung aufweist. Die Erfindung betrifft weiterhin eine Batteriezelle.

Elektrisch beziehungsweise elektromotorisch angetriebene oder antreibbare Kraftfahrzeuge, wie beispielsweise Elektro- oder Hybridfahrzeuge, umfassen in der Regel einen Elektromotor, mit dem eine oder beide Fahrzeugachsen antreibbar sind. Zur Versorgung mit elektrischer Energie ist der Elektromotor üblicherweise an eine fahrzeuginterne (Hochvolt-)Batterie als elektrischen Energiespeicher angeschlossen.

Unter einer insbesondere elektrochemischen Batterie ist hier und im Folgenden insbesondere eine sogenannte sekundäre Batterie (Sekundärbatterie) des Kraftfahrzeugs zu verstehen. Bei einer solchen (sekundären) Fahrzeugbatterie ist eine verbrauchte chemische Energie mittels eines elektrischen (Auf-)Ladevorgangs wiederherstellbar. Derartige Fahrzeugbatterien sind beispielsweise als elektrochemische Akkumulatoren, insbesondere als Lithium-Ionen-Akkumulatoren, ausgeführt.

Zur Erzeugung oder Bereitstellung einer ausreichend hohen Betriebsspannung weisen solche Fahrzeugbatterien typischerweise mindestens ein Batteriemodul (Batteriezellmodul) auf, bei welchem mehrere einzelne Batteriezellen modular verschaltet sind. Alternativ ist ein sogenanntes Cell2Pack-Design möglich, bei welchem die Batteriezellen direkt zu der Fahrzeugbatterie zusammengeschaltet, insbesondere parallelgeschaltet, und nicht vorab zu (Batterie-)Modulen zusammengefasst werden.

Die Batteriezellen können beispielsweise als sogenannte prismatische Zellen mit einem festen, metallischen Zellgehäuse in kubischer oder prismatischer Form ausgeführt sein. Das auch als Hardcase oder Zell Can bezeichnete Zellgehäuse ist hierbei beispielsweise als ein topfförmiges Aluminium-Tiefziehteil ausgeführt, welches mit einer Deckelplatte verschlossen ist, an welcher die Batteriepole zur Kontaktierung der Batteriezelle angeordnet sind. Durch das feste metallische Gehäuseformat ergeben sich vor allem raumsparende Vorteile beim Packaging der Batteriezellen zum Batteriemodul.

In dem Zellgehäuse oder der Zell Can ist in der Regel ein sogenannter Zellstapel mit einer Anzahl von gestapelten Anoden- und Kathodenpaketen aufgenommen. Der Zellstapel wird hierbei üblicherweise in das Zellgehäuse eingesetzt, und anschließend das Zellgehäuse mit der Deckelplatte verschlossen. Die Deckelplatte weist eine Einfüllöffnung auf, durch welche ein (Flüssig-)Elektrolyt in das Zellgehäuse eingefüllt wird. Abschließend wird die Einfüllöffnung hermetisch fluiddicht und gegen den Elektrolyt widerstandsfähig verschlossen oder versiegelt.

Herkömmlicherweise wird eine Kugel aus Kunststoff, beispielsweise aus PTFE (Polytetrafluorethylen), in die Einfüllöffnung mittels eines Pressfits eingepresst. Eine metallische Scheibe oder ein metallisches Plättchen, insbesondere aus Aluminium, wird anschließend als Abdeckung und zur Arretierung der Kugel mit dem Rand der Einfüllöffnung verschweißt. Dadurch ist das Versiegeln des Zellgehäuses vergleichsweise aufwendig und kostenintensiv.

Aus der WO 2014/072127 A1 ist eine prismatische Batteriezelle bekannt, bei welcher die Einfüllöffnung mit einem Niet verschlossen wird. Der Niet wird formschlüssig in die Einfüllöffnung eingesetzt und anschließend durch Bildung eines gehäuseinnenseitigen (zweiten) Nietkopfs am Zellgehäuse befestigt. Die Nietköpfe überragen hierbei radial den Rand der Einfüllöffnung, so dass diese abgedichtet ist.

Der Erfindung liegt die Aufgabe zugrunde, ein besonders geeignetes Herstellungsverfahren für eine Batteriezelle anzugeben. Insbesondere soll eine möglichst aufwandreduzierte und zeitsparende fluiddichte Versiegelung einer Einfüllöffnung realisiert werden. Der Erfindung liegt weiterhin die Aufgabe zugrunde, eine besonders geeignete Batteriezelle sowie eine besonders geeignete Fahrzeugbatterie anzugeben.

Hinsichtlich des Verfahrens wird die Aufgabe mit den Merkmalen des Anspruchs 1 und hinsichtlich der Batteriezelle mit den Merkmalen des Anspruchs 4 sowie hinsichtlich der Fahrzeugbatterie mit den Merkmalen des Anspruchs 7 erfindungsgemäß gelöst. Vorteilhafte Ausgestaltungen und Weiterbildungen sind Gegenstand der Unteransprüche.

Das erfindungsgemäße Verfahren ist zur Herstellung einer Batteriezelle, insbesondere einer Lithium-Ionen-Zelle, vorgesehen, sowie dafür geeignet und eingerichtet.

Die Batteriezelle ist hierbei als eine prismatische Batteriezelle mit einem prismatischen oder kubischen Zellgehäuse (Zell Can) ausgeführt. Das Zellgehäuse ist beispielsweise ein metallisches Tiefziehteil, welches mittels einer metallischen Deckelplatte verschlossen ist. Das Zellgehäuse und die Deckelplatte sind beispielsweise aus einem Aluminiummaterial hergestellt. An der Deckelplatte sind beispielsweise die Batteriepole zur Kontaktierung und Verschaltung der Batteriezelle angeordnet. Die Deckelplatte weist weiterhin eine Einfüllöffnung zum Einfüllen oder Befüllen des Zellgehäuses mit einem flüssigen Elektrolyten (Flüssigelektrolyt) auf.

Nach dem Einfüllen wird die auch als Elektrolyteinfüllloch bezeichnete Einfüllöffnung erfindungsgemäß mit einem Bolzensetzprozess versiegelt, indem ein Setzbolzen als Schließpin oder Versiegelungspin derart in die Einfüllöffnung eingepresst wird, dass die Einfüllöffnung fluiddicht, insbesondere gasdicht, verschlossen ist. Der Setzbolzen ist hierbei zweckmäßigerweise aus einem Material hergestellt oder zumindest mit einem solchen Material beschichtet, welches chemisch inert gegenüber dem Flüssigelektrolyten ist. Dadurch ist eine einfache, kostengünstige und insbesondere zeitsparende fluiddichte Versiegelung der Batteriezelle realisiert, so dass ein besonders vorteilhaftes Herstellungsverfahren gegeben ist.

Durch das Bolzensetzen ist ein sehr schneller und stabiler Versiegelungsprozess realisiert, welcher lediglich einen geringen Wärmeeintrag in das Zellgehäuse beziehungsweise in die Deckelplatte aufweist. Dadurch wird die Versiegelungsgeschwindigkeit beim Abdichten oder Versiegeln des Zellgehäuses erhöht, wodurch die Herstellungszeit für die Batteriezelle vorteilhaft reduziert wird.

Das Bolzensetzen wird typischerweise als ein Fügeverfahren verwendet, bei welchem ein Deckblech mit einem Basismaterial durch einen insbesondere nagelförmigen Setzbolzen als Hilfsfügeteil vorlochfrei gefügt werden. Erfindungsgemäß wird der Setzbolzen beim Bolzensetzen hierbei jedoch nicht als ein (Hilfs-)Fügeteil verwendet, sondern als ein Dichtteil zur Abdichtung der Einfüllöffnung. Mit anderen Worten wird erfindungsgemäß ein Bolzensetzprozess zu Versiegelung des Zellgehäuses verwendet. Unter einem "Bolzensetzen" oder "Bolzensetzprozess" ist hier und im Folgenden somit insbesondere ein Dichtverfahren zu verstehen, bei welchem ein Setzbolzen als Dichtteil mit hoher Geschwindigkeit in die Einfüllöffnung eingetrieben wird.

In einer besonders bevorzugten Ausgestaltung wird der Setzbolzen hierbei mit einer derart hohen Geschwindigkeit in die Einfüllöffnung eingepresst oder eingetrieben, dass der Setzbolzen aufgrund einer reibungsbedingten Wärmeentwicklung oberflächlich mit der Deckelplatte beziehungsweise dem Rand der Einfüllöffnung verschweißt. Das Bolzensetzen beziehungsweise der Bolzensetzprozess ist somit insbesondere als ein Hochgeschwindigkeitsbolzensetzen ausgeführt. Unter einer Hochgeschwindigkeit wird hierbei insbesondere eine solche Setzgeschwindigkeit oder Eintriebsgeschwindigkeit verstanden, welche hinreichend hoch ist, um aufgrund der resultierenden Reibungswärme zu der Schweißverbindung zu führen. Welche Geschwindigkeit hierbei als hinreichend gilt und wie groß die Reibungswärme konkret ist, ist dabei zunächst nebensächlich. Dies lässt sich beispielsweise für unterschiedliche Setzbolzen und Deckelplatten aus entsprechenden Versuchen oder Erprobungen ermitteln. Die Geschwindigkeit ist hierbei durch den Einpressdruck des Setzbolzens einstellbar oder vorgebbar. Dadurch ist eine besonders betriebssichere und zuverlässige Abdichtung oder Versiegelung der Einfüllöffnung realisiert. Insbesondere erfolgt die Abdichtung des Zellgehäuses hierbei am Bolzenschaft beziehungsweise in der Einfüllöffnung.

Der Setzbolzen weist hierbei beispielsweise einen in die Einfüllöffnung eingepressten oder einpressbaren Bolzenschaft auf. In einer bevorzugten Weiterbildung weist der Setzbolzen beziehungsweise dessen Bolzenschaft ein Übermaß gegenüber dem Durchmesser der Einfüllöffnung auf. Mit anderen Worten wird ein Setzbolzen mit einem Übermaß verwendet. Der Setzbolzen weist also gegenüber der Einfüllöffnung eine Presspassung oder Übermaßpassung auf. Dadurch wird ein ausreichend hohes Reibmoment für die Schweißverbindung sowie eine besonders dichtende Anlage am Rand der Einfüllöffnung gewährleistet.

Beispielsweise ist der Setzbolzen als ein sogenannter RIVTAC-Bolzen ausgeführt. Der Bolzenschaft ist vorzugsweise mit einer außenflächigen Rändelung versehen. Die Rändelung erhöht hierbei die Reibung zwischen dem Setzbolzen und dem Rand der Einfüllöffnung. Aufgrund der resultierenden, kurzfristigen, Temperatursteigerung in der Eintriebs- oder Einpresszone, und der dadurch verbesserten Fließfähigkeit des Deckelmaterials, kann das Deckelmaterial in die Rändelungen am Bolzenschaft verdrängt werden beziehungsweise in diese einfließen. Der Setzbolzen wird somit durch teilweises oder partielles Aufschmelzen der Deckelplatte beziehungsweise des Rands der Einfüllöffnung nach Art eines Reibschweißens mit der Deckelplatte gefügt. Dies resultiert in einer form- und/oder kraftschlüssigen und beispielsweise stoffschlüssigen Fügeverbindung des Setzbolzens und der Deckelplatte, welche die Einfüllöffnung zuverlässig und dauerhaft abdichtet.

Die Konjunktion "und/oder" ist hier und im Folgenden derart zu verstehen, dass die mittels dieser Konjunktion verknüpften Merkmale sowohl gemeinsam als auch als Alternativen zueinander ausgebildet sein können.

Unter einem "Formschluss" oder einer "formschlüssigen Verbindung" zwischen wenigstens zwei miteinander verbundenen Teilen wird hier und im Folgenden insbesondere verstanden, dass der Zusammenhalt der miteinander verbundenen Teile zumindest in einer Richtung durch ein unmittelbares Ineinandergreifen von Konturen der Teile selbst oder durch ein mittelbares Ineinandergreifen über ein zusätzliches Verbindungsteil erfolgt. Das "Sperren" einer gegenseitigen Bewegung in dieser Richtung erfolgt also formbedingt.

Unter einem "Kraftschluss" oder einer "kraftschlüssigen Verbindung" zwischen wenigstens zwei miteinander verbundenen Teilen wird hier und im Folgenden insbesondere verstanden, dass die miteinander verbundenen Teile aufgrund einer zwischen ihnen wirkenden Reibkraft gegen ein Abgleiten aneinander gehindert sind. Fehlt eine diese Reibkraft hervorrufende "Verbindungskraft" (dies bedeutet diejenige Kraft, welche die Teile gegeneinanderdrückt, beispielsweise eine Schraubenkraft oder die Gewichtskraft selbst), kann die kraftschlüssige Verbindung nicht aufrechterhalten und somit gelöst werden.

Unter einem "Stoffschluss" oder einer "stoffschlüssigen Verbindung" zwischen wenigstens zwei miteinander verbundenen Teilen wird hier und im Folgenden insbesondere verstanden, dass die miteinander verbundenen Teile an Ihren Kontaktflächen durch stoffliche Vereinigung oder Vernetzung (beispielsweise aufgrund von atomaren oder molekularen Bindungskräften) gegebenenfalls unter Wirkung eines Zusatzstoffs zusammengehalten werden.

Die erfindungsgemäße Batteriezelle weist ein prismatisches Zellgehäuse mit einer stirnseitigen Deckelplatte auf, wobei die Deckelplatte eine Einfüllöffnung zum Einfüllen eines Flüssigelektrolyten in das Zellgehäuse aufweist. Erfindungsgemäß ist die Einfüllöffnung hierbei durch einen eingepressten Setzbolzen fluiddicht verschlossen. Das Zellgehäuse beziehungsweise die Deckelplatte weist also eine mit dem Gehäuseinnenraum verbundene Einfüllöffnung auf, welche im Zuge eines (Ein-)Füllprozesses des Flüssigelektrolyten offen ist, und welche nach dem Füllprozess mit dem Setzbolzen fluiddicht verschlossen ist. Der Setzbolzen ist hierbei form- und/oder kraftschlüssig und beispielsweise auch stoffschlüssig in der Einfüllöffnung befestigt. Dadurch ist eine besonders geeignete Batteriezelle realisiert. Die im Hinblick auf das Verfahren angeführten Vorteile und Ausgestaltungen sind hierbei sinngemäß auch auf die Batteriezelle übertragbar und umgekehrt.

Da die lochartige Einfüllöffnung bereits in die Deckelplatte eingebracht ist, ist es möglich, auf eine Bolzenspitze des Setzbolzens zu verzichten. Der Setzbolzen weist daher in einer denkbaren Ausführung vorzugsweise einen spitzenlosen oder stumpfen Bolzenschaft auf. Mit anderen Worten ist am stirnseitigen Ende des Bolzenschafts keine ogivale Spitze vorgesehen. Der Bolzenschaft weist somit im Wesentlichen eine zylindrische, insbesondere kreiszylindrische, Form mit einer flachen Stirnseite auf. Dadurch ist ein besonders zweckmäßiger, auf die Abdichtung oder Versiegelung der Einfüllöffnung abgestimmte, Setzbolzen realisiert.

In einer besonders fluiddichten Ausbildung weist der Setzbolzen einen umlaufenden Dichtring auf, welcher beispielsweise auf den Bolzenschaft aufgesetzt ist. Der Dichtring ist hierbei im Füge- oder Montagezustand des Setzbolzens über einen Kopfzug eines Bolzenkopfs des Setzbolzens auf die Deckelplatte beziehungsweise auf den Rand der Einfüllöffnung gepresst. Durch den zusätzlichen Dichtring und den mittels des Kopfzugs realisierten Dichtdrucks, wird die Abdichtung der Einfüllöffnung verbessert.

Die erfindungsgemäße Fahrzeugbatterie ist für ein Kraftfahrzeug vorgesehen, sowie dafür geeignet und eingerichtet. Dabei gelten die Ausführungen im Zusammenhang mit dem Verfahren und/oder der Batteriezelle sinngemäß auch für die Fahrzeugbatterie und umgekehrt.

Bei der Fahrzeugbatterie handelt es sich hierbei beispielsweise um eine Lithium-Ionen-Batterie, welche als Traktionsbatterie des Kraftfahrzeugs verwendet wird. Bei dem Kraftfahrzeug handelt es sich insbesondere um ein elektrisch angetriebenes oder antreibbares Kraftfahrzeugs, insbesondere um ein Elektro- oder Hybridfahrzeug. Die Fahrzeugbatterie weist hierbei ein Batteriegehäuse mit mindestens einer darin aufgenommenen Batteriezelle auf. Die Fahrzeugbatterie weist hierbei beispielsweise Batteriemodule auf, oder ist als Cell2Pack-Design ausgeführt. Aufgrund der erfindungsgemäßen Verwendung eines Bolzensetzprozesses zur Versiegelung der Batteriezelle wird die Takt- oder Produktionszeit bei der Herstellung der Batteriezelle verkürzt, wodurch die Batteriezellen besonders kostengünstig herstellbar sind. Dies überträgt sich in der Folge vorteilhaft auf die Herstellungskosten der Fahrzeugbatterie. Dadurch ist eine besonders geeignete Fahrzeugbatterie realisiert.

Nachfolgend sind Ausführungsbeispiele der Erfindung anhand einer Zeichnung näher erläutert. Darin zeigen:
- Fig. 1: in schematischer Darstellung ein Kraftfahrzeug mit einer Fahrzeugbatterie mit einer Anzahl von Batteriezellen,
- Fig. 2: in schematischer Darstellung eine Batteriezelle mit einem Zellgehäuse,
- Fig. 3: in Draufsicht eine Deckelplatte des Zellgehäuses,
- Fig. 4: in aufeinanderfolgenden schematischen Darstellungen einen Versiegelungs-prozess des Zellgehäuses, und
- Fig. 5 bis Fig. 7: in schematischen Darstellungen unterschiedliche Ausführungsformen für einen Setzbolzen.

Einander entsprechende Teile und Größen sind in allen Figuren stets mit den gleichen Bezugszeichen versehen.

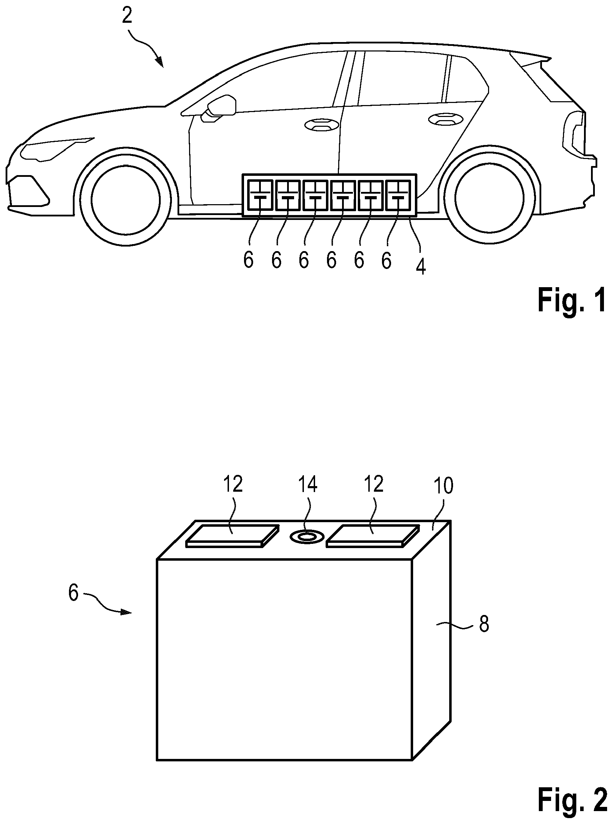

Die Fig. 1 zeigt in schematischer und vereinfachter Darstellung ein elektrisch angetriebenes oder antreibbares Kraftfahrzeug 2, welches zum Beispiel als ein Elektro- oder Hybridfahrzeug ausgeführt ist. Das Kraftfahrzeug 2 weist einen fahrzeuginternen Energiespeicher als Traktions- oder Fahrzeugbatterie 4 auf. Die Fahrzeugbatterie 4 weist eine Anzahl von Batteriezellen 6 auf, welche beispielsweise zu Batteriemodulen gruppiert oder vorkonfektioniert sind. Alternativ weist die Fahrzeugbatterie 4 beispielsweise ein Cell2Pack-Design auf. Beispielhaft sind in der Fig. 1 lediglich sechs Batteriezellen 6 gezeigt.

In der Fig. 2 ist in schematischer und vereinfachter Darstellung eine Batteriezelle 6 einzeln dargestellt. Die Batteriezelle 6 ist insbesondere eine Lithium-Ionen-Zelle mit einem prismatischen Zellgehäuse (Zell Can) 8. Die Batteriezelle 6 ist somit insbesondere als eine prismatische Zelle ausgebildet. Das Zellgehäuse 8 ist stirnseitig mit einer Deckelplatte 10 verschlossen, an welcher die Batteriepole 12 zur Kontaktierung und Verschaltung der Batteriezelle 6 angeordnet sind. Die Batteriepole 12 sind beispielsweise als Busbar-Kontakte ausgeführt, welche zur Kontaktierung oder Verschaltung insbesondere verschweißt werden.

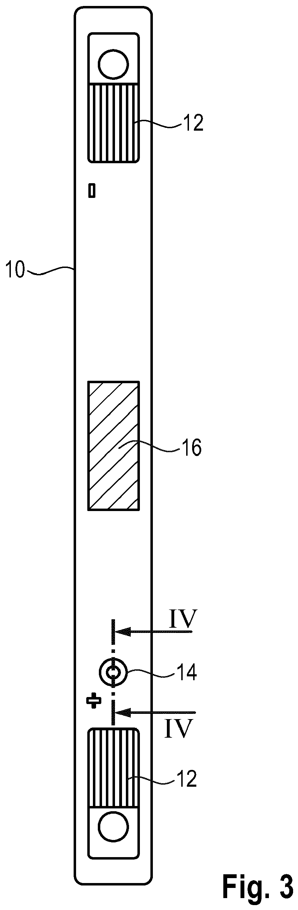

In dem Zellgehäuse 6 ist ein nicht näher gezeigter Zellstapel aufgenommen, welcher von einem in das Zellgehäuse 6 eingefüllten Flüssigelektrolyten umspült ist. Zur Einfüllung des Flüssigelektrolyten im Fügezustand des Zellgehäuses 6 ist eine Einfüllöffnung 14 in die Deckelplatte 10 eingebracht. Wie insbesondere in der Fig. 3 ersichtlich ist, weist die Deckelplatte 10 weiterhin eine Berstöffnung als Entlüftungsöffnung auf, welche mit einer Berstscheibe oder einem Berstplättchen 16 verschlossen ist. Das Berstplättchen 16 öffnet bei einem Überdruck innerhalb des Zellgehäuses 6, beispielsweise bei einem Innendruck von 8 bar.

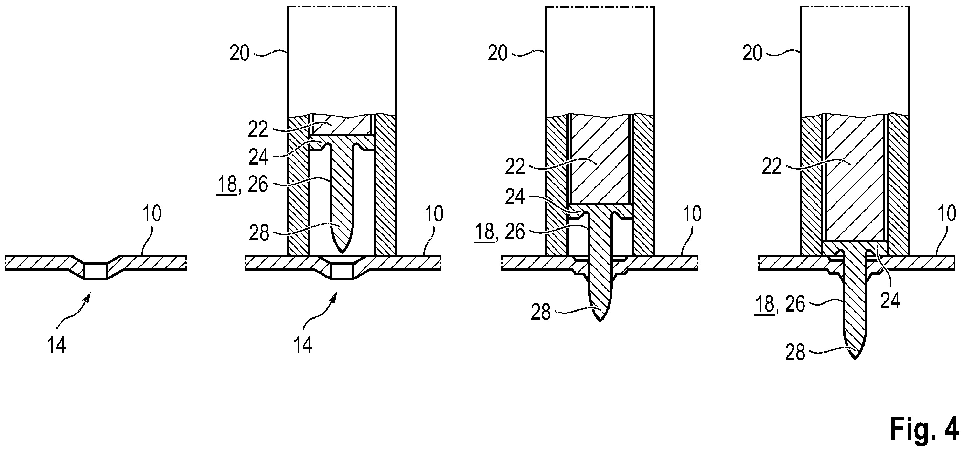

Zum fluiddichten Verschließen oder Versiegeln der Einfüllöffnung 14 ist ein Setzbolzen 18 vorgesehen, welcher mittels eines Bolzensetzprozesses, insbesondere mittels Hochgeschwindigkeitbolzensetzen, in die Einfüllöffnung 14 eingebracht ist. Das Einpressen des Setzbolzens 18 ist nachfolgend anhand der Darstellungen der Fig. 4 näher erläutert. Die Fig. 4 zeigt eine Schnittansicht durch die Einfüllöffnung 14 gemäß der Schnittlinie IV-IV in Fig. 3 im Zuge des Bolzensetzprozesses.

In einem ersten Prozessschritt (zweite Darstellung von links) wird der Setzbolzen 18 mittels eines Bolzensetzgeräts 20 über der Einfüllöffnung 14 positioniert, und in einem zweiten Prozessschritt (dritte und vierte Darstellung von links) in die Einfüllöffnung 14 eingetrieben oder eingepresst.

Das Bolzensetzgerät 20 weist einen linear absenkbaren Stempel 22 auf. Der Stempel 22 übt beim Absenken einen Füge- oder Einpressdruck auf den Setzbolzen 18 aus, welcher in der Folge mit einer Setzgeschwindigkeit in die Einfüllöffnung 14 eingetrieben oder eingepresst wird.

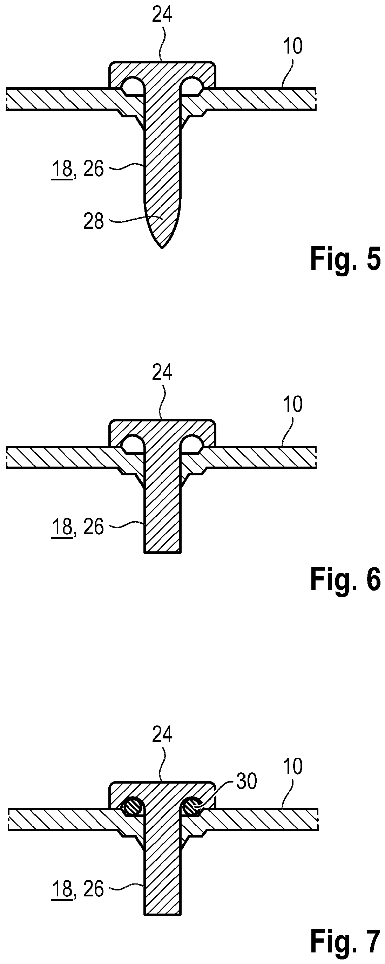

In den Darstellungen der Fig. 4 und Fig. 5 ist der Setzbolzen 18 beispielsweise als ein RIVTAC-Bolzen ausgeführt, und weist insbesondere einen Bolzenkopf 24 und einen sich hieran einstückig anschließenden Bolzenschaft 26 auf. Der im Wesentlichen zylindrische oder kreiszylindrische Bolzenschaft 26 weist in dieser Ausführungsform an einem dem Bolzenkopf 24 gegenüberliegenden Freiende eine ogivale Spitze 28 auf. Der Bolzenschaft 26 weist hierbei gegenüber der Einfüllöffnung 14 ein Übermaß auf. Des Weiteren ist der Bolzenschaft 26 beispielsweise mit einer außenseitigen Rändelung versehen. Die Spitze 28 wirkt hierbei beispielsweise als Positionierungshilfe beim Einpressen in die Einfüllöffnung 14.

Der Setzbolzen 18 wird hierbei mit einer derart hohen Geschwindigkeit in die Einfüllöffnung 14 eingepresst oder eingetrieben, dass der Setzbolzen 18 aufgrund einer reibungsbedingten Wärmeentwicklung oberflächlich mit der Deckelplatte 10 beziehungsweise mit dem Rand der Einfüllöffnung 14 verschweißt. Im eingepressten Zustand ist der Setzbolzen 18 hierbei form- und/oder kraftschlüssig sowie beispielsweise stoffschlüssig mit dem Rand der Einfüllöffnung 14 gefügt. Durch diese Schweißverbindung ist eine besonders fluiddichte Abdichtung oder Versiegelung der Einfüllöffnung 14 realisiert.

Da die lochartige Einfüllöffnung 14 bereits in die Deckelplatte 10 eingebracht ist, ist es möglich, auf die Spitze 28 des Setzbolzens 18 zu verzichten. Die Fig. 6 zeigt eine entsprechende spitzenlose oder stumpfe Ausführungsform des Setzbolzens 18 beziehungsweise des Bolzenschafts 26.

In der Fig. 7 ist eine weitere Ausführungsform des Setzbolzens 18 gezeigt. In dieser Ausgestaltung ist ein zusätzlicher Dichtring 30 auf den spitzenlosen Setzbolzen 18 beziehungsweise auf den Bolzenschaft 26 aufgebracht. Der Bolzenkopf 24 weist hierbei beispielsweise eine nicht näher bezeichnete Ringnut zur Aufnahme und Halterung des Dichtrings 30 auf. Wie in Fig. 7 vergleichsweise deutlich ersichtlich ist, ist der Dichtring 30 im Füge- oder Montagezustand des Setzbolzens 18 über einen Kopfzug des Bolzenkopfs 24 auf die Deckelplatte 10 beziehungsweise auf den Rand der Einfüllöffnung 14 gepresst, so dass die Einfüllöffnung 14 umfangsseitig durch den Dichtring 30 abgedichtet ist.

Die beanspruchte Erfindung ist nicht auf die vorstehend beschriebenen Ausführungsbeispiele beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit den verschiedenen Ausführungsbeispielen beschriebenen Einzelmerkmale im Rahmen der offenbarten Ansprüche auch auf andere Weise kombinierbar, ohne den Gegenstand der beanspruchten Erfindung zu verlassen.

### Bezugszeichenliste

- 2: Kraftfahrzeug
- 4: Fahrzeugbatterie
- 6: Batteriezelle
- 8: Zellgehäuse
- 10: Deckelplatte
- 12: Batteriepol
- 14: Einfüllöffnung
- 16: Berstplättchen
- 18: Setzbolzen
- 20: Bolzensetzgerät
- 22: Stempel
- 24: Bolzenkopf
- 26: Bolzenschaft
- 28: Spitze
- 30: Dichtring

## Patentansprüche

1. Verfahren zur Herstellung einer Batteriezelle (6), wobei die Batteriezelle (6) ein prismatisches Zellgehäuse (8) mit einer stirnseitigen Deckelplatte (10) mit einer Einfüllöffnung (14) aufweist, bei welchem in die Einfüllöffnung (14) ein Setzbolzen (18) durch ein Bolzensetzprozess derart eingepresst wird, dass der Setzbolzen (18) die Einfüllöffnung (14) fluiddicht verschließt.

2. Verfahren nach Anspruch 1,
**dadurch gekennzeichnet,**
**dass** der Setzbolzen (18) mit einer derart hohen Geschwindigkeit in die Einfüllöffnung (14) eingepresst wird, dass der Setzbolzen (18) aufgrund einer reibungsbedingten Wärmeentwicklung oberflächlich mit der Deckelplatte (10) verschweißt.

3. Verfahren nach Anspruch 1 oder 2,
**dadurch gekennzeichnet,**
**dass** der Setzbolzen (18) ein Übermaß gegenüber dem Durchmesser der Einfüllöffnung (14) aufweist.

4. Batteriezelle (6) aufweisend ein prismatisches Zellgehäuse (8) mit einer stirnseitigen Deckelplatte (10), wobei die Deckelplatte (10) eine Einfüllöffnung (14) zum Einfüllen eines Flüssigelektrolyten in das Zellgehäuse (8) aufweist, und wobei die Einfüllöffnung (14) durch einen eingepressten Setzbolzen (18) fluiddicht verschlossen ist.

5. Batteriezelle (6) nach Anspruch 4,
**dadurch gekennzeichnet,**
**dass** der Setzbolzen (18) einen spitzenlosen Bolzenschaft (26) aufweist.

6. Batteriezelle (6) nach Anspruch 4 oder 5,
**dadurch gekennzeichnet,**
**dass** der Setzbolzen (18) einen umlaufenden Dichtring (30) aufweist, welcher über einen Kopfzug des Setzbolzens (18) auf die Deckelplatte (10) gepresst ist.

7. Fahrzeugbatterie (4) für ein elektrisch angetriebenes oder antreibbares Kraftfahrzeug (2), aufweisend mindestens eine Batteriezelle (6) nach einem der Ansprüche 4 bis 6.
